# EUROPEAN PATENT APPLICATION

(11) **EP 0 878 897 A1**
(43) Date of publication of application: **18.11.1998**
(21) Application number: 97201431.0
(22) Date of filing: 13.05.1997
(51) Int. Cl.: H02K 9/19

(54) **Electric motor or generator**

(71) Applicant: GENERAL MOTORS CORPORATION, Detroit Michigan 48202 (US)
(72) Inventor: van Rooij, Harold, 8398 Roodt (LU); Dil, Dirk, 1527 Luxembourg (LU)
(74) Representative: Denton, Michael John

(57) **Abstract**

An electric motor or generator (10) comprising a housing (12) which is substantially cup-shaped and having an end wall (26) and an annular outer wall (28), a fluid flow passage (30) being formed through the end wall, and a fluid flow passage (32) being formed through the outer wall; an inlet (34) connecting with one (30) of the flow passages; an outlet (36) connecting with the other (32) of the flow passages; a stator (14) fixedly secured within the housing; a shaft (16) having a longitudinal axis (A), extending into the housing, and rotatable about the longitudinal axis relative to the housing and the stator; and a rotor coil (18) mounted on the shaft and positioned within the stator; wherein the flow passages are integrally formed in the end wall and the outer wall of the housing and are connected to define a single flow path through the housing between the inlet and the outlet. Improved cooling with reduced risk of blockage.

## Description

### Technical Field

The present invention relates to an electric motor or generator, such as an alternator, having fluid cooling passages formed in the housing of the electric motor or generator.

### Background of the Invention

Electric motors or generators having a stator secured within the housing of the motor or generator are well known. A rotor coil mounted on a shaft is positioned within the stator and is rotatable relative to the stator about the longitudinal axis of the shaft. Liquid cooling is provided for the motor or generator by passing fluid, such as water, through passages formed in the housing (which is substantially cup-shaped) in order to provide cooling for the stator. The fluid passes through the housing by way of two separate passages formed in the housing. One of the passages passes through the outer wall to provide cooling for the stator. The other passage passes through the end wall to provide cooling for the electronic components mounted on the housing. A single inlet on the housing connects with the two passages, and a single outlet also connects with the two passages. EP-A-0231785 describes such a known arrangement. In this arrangement, the fluid flow at the inlet is split between the two passages and has a short flow path through the housing. Such an arrangement restricts the efficiency of heat transfer to the cooling fluid.

### Summary of the Invention

It is an object of the present invention to provide an electric motor or generator having improved cooling compared to the above described arrangement.

An electric motor or generator in accordance with the present invention comprises a housing which is substantially cup-shaped and having an end wall and an annular outer wall, a fluid flow passage being formed through the end wall, and a fluid flow passage being formed through the outer wall; an inlet connecting with one of the flow passages; an outlet connecting with the other of the flow passages; a stator fixedly secured within the housing; a shaft having a longitudinal axis, extending into the housing, and rotatable about the longitudinal axis relative to the housing and the stator; and a rotor coil mounted on the shaft and positioned within the stator; wherein the flow passages are integrally formed in the end wall and the outer wall and are connected to define a single flow path through the housing between the inlet and the outlet.

The single flow path defined by the flow passages provides an increased flow path for the cooling fluid as it passes through the housing when compared to previously known arrangements. Such an arrangement provides improved cooling for the stator and any electronic components mounted on the housing; and reduces the risk of blockage (because of full flow through both flow passages, rather than split flow).

### Brief Description of the Drawings

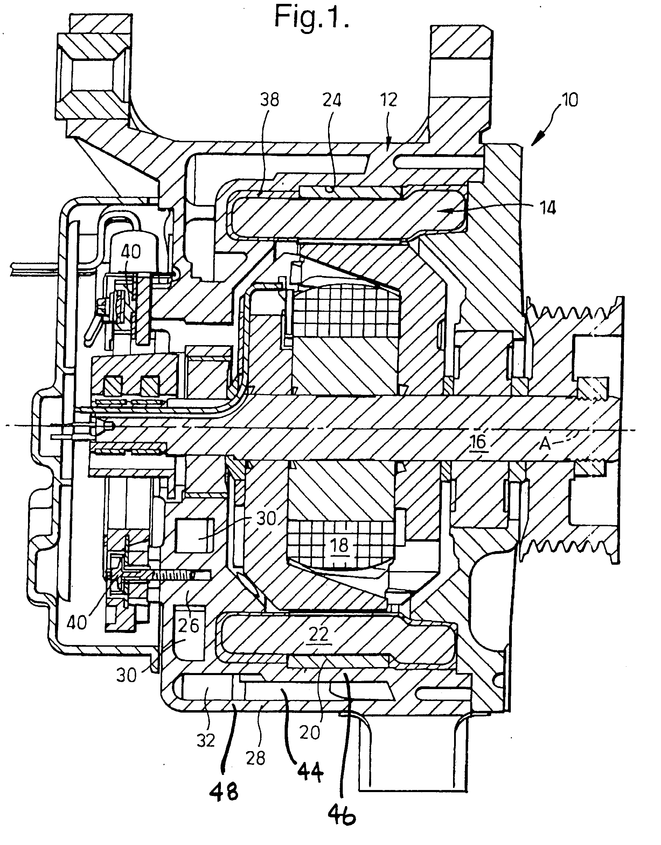

The present invention will now be described, by way of example, with reference to the accompanying drawings, in which:-
Figure 1 is a cross-sectional view of an electric motor or generator in accordance with the present invention; and
Figure 2 is a perspective view, partially cut-away, of the housing of the electric motor or generator of Figure 1 showing the single fluid flow path through the housing.

### Description of the Preferred Embodiment

Referring to the drawings, the embodiment of electric motor or generator in accordance with the present invention is an alternator 10. The alternator 10 comprises a housing 12, a stator 14, a shaft 16, and a rotor coil 18. The stator 14 is substantially annular and comprises a number of stator laminations 20 with a coil 22 wound around and through the laminations. The housing 12 has an annular inner surface 24 against which the stator 14 makes a tight fit. The housing 12 is substantially cup-shaped and comprises an end wall 26 and an annular outer wall 28. A fluid flow passage 30 is formed through the end wall 26, and a fluid flow passage 32 is formed through the outer wall 28. A fluid inlet 34 and a fluid outlet 36 are formed on the housing 12. The stator 14 is preferably impregnated with a thermally conductive epoxy resin 38 after the stator has been positioned in the housing 12, with the epoxy resin substantially filling every gap between the stator coil 22, the laminations 20, and the housing 12. The epoxy resin 38 enhances the thermal conductivity between the stator 14 and the cooling fluid in the flow passage 32 in the outer wall 28 of the housing 12. The rotor coil 18 is mounted on the shaft 16 and positioned inside the stator 14. The shaft 16 has a longitudinal axis A and is rotatable about its axis relative to the housing 12 and the stator 14. Electronic components 40, such as a rectifier and voltage regulator, are mounted on the end wall 26 of the housing 12 and are cooled by the cooling fluid passing through the flow passage 30 in the end wall 26 of the housing 12. The alternator 10 as thus far described is well known and other features of the alternator which are well known to those skilled in the art will not be described in further detail.

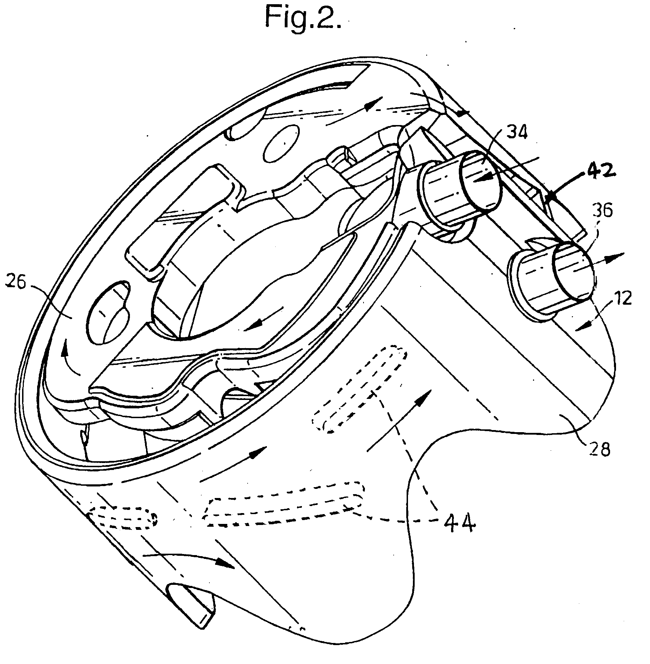

The flow passages 30,32 are integrally formed in the end wall 26 and the outer wall 28 of the housing 12 during formation of the housing. The flow passages 30,32 are connected together, and the inlet 34 is connected to only one 30 of the flow passages, and the outlet 36 is only connected to the other flow passage 32. As a consequence, the flow passages 30,32 are connected to form a single fluid flow path through the housing 12 from the inlet 34 to the outlet 36, and the flow of cooling fluid through the flow passages 30,32 is by way of this single path. As shown in Figure 2, the flow passages 30,32 may be connected in such a way that fluid flows through the flow passage 30 in the end wall 26 in one direction, and then flows through the flow passage 32 in the outer wall 28 in the opposite direction. Alternatively, the flow passages may be connected such that fluid flow is in the same direction through both the end wall and the outer wall of the housing.

The housing 12 with the integrally formed flow passages 30,32 may be formed by any suitable method, but is preferably formed by casting using the lost-foam process or by sand casting, with the inlet 34 and the outlet 36 preferably also being integrally formed with the housing.

A venting device 42 is preferably formed in the flow passage 32 in the outer wall 28. The venting device 42 collects air bubbles in the cooling fluid and directs the air bubbles to the fluid outlet 36.

Flow directing ribs 44 are integrally formed in the flow passage 32 in the outer wall 28 and extend between the inner peripheral wall 46 and the outer peripheral wall 48 of the outer wall 28 of the housing 12. The flow directing ribs 44 act to direct the cooling fluid into potential air pockets in the flow passage 32, and act as strengthening means for the housing 12.

The single flow path defined by the flow passages 30,32 provides an increased flow path for the cooling fluid as it passes through the housing 12. Such an arrangement provides improved cooling for the stator 14 and any electronic components 40 mounted on the housing 12; reduces the risk of blockage (because of full flow through both flow passages 30,32, rather than split flow); and allows a stronger housing to be constructed.

## Claims

1. An electric motor or generator (10) comprising a housing (12) which is substantially cup-shaped and having an end wall (26) and an annular outer wall (28), a fluid flow passage (30) being formed through the end wall, and a fluid flow passage (32) being formed through the outer wall; an inlet (34) connecting with one (30) of the flow passages; an outlet (36) connecting with the other (32) of the flow passages; a stator (14) fixedly secured within the housing; a shaft (16) having a longitudinal axis (A), extending into the housing, and rotatable about the longitudinal axis relative to the housing and the stator; and a rotor coil (18) mounted on the shaft and positioned within the stator; wherein the flow passages (30,32) are integrally formed in the end wall (26) and the outer wall (28) and are connected to define a single flow path through the housing (12) between the inlet (34) and the outlet (36).

2. An electric motor or generator as claimed in Claim 1, wherein flow directing ribs (44) are integrally formed in the fluid flow passage (32) in the outer wall (28), the flow directing ribs extending across the fluid flow passage.

3. An electric motor or generator as claimed in Claim 1 or Claim 2, wherein the housing (12) and the flow passages (30,32) therein have been integrally cast using the lost foam process.

4. An electric motor or generator as claimed in any one of Claims 1 to 3, wherein the inlet (34) and the outlet (36) have been integrally formed with the housing (12).

5. An electric motor or generator as claimed in any one of Claims 1 to 4, wherein the flow passage (30) in the end wall (26) of the housing (12) allows fluid flow in one direction, and wherein the flow passage (32) in the outer wall (28) of the housing allows fluid flow in the opposite direction.

6. An electric motor or generator as claimed in any one of Claims 1 to 5, wherein the stator (14) is impregnated with a thermally conductive epoxy resin (38).

7. An electric motor or generator as claimed in any one of Claims 1 to 6, wherein the electric motor or generator is an alternator (10).
